# EUROPÄISCHE PATENTANMELDUNG

(11) **EP 2 719 644 A1**
(43) Veröffentlichungstag der Anmeldung: **16.04.2014**
(21) Anmeldenummer: 13004524.8
(22) Anmeldetag: 16.09.2013
(51) Int. Cl.: B65G 47/84, B29C 49/42, B67C 3/24

(54) **Vorrichtung zur Übergabe von Gegenständen**

(30) Priorität: 15.10.2012 DE 202012009837 U
(71) Anmelder: Seidenader Maschinenbau GmbH, 85570 Markt Schwaben (DE)
(72) Erfinder: Ringer, Fabrice, 85664 Hohenlinden (DE); Puma, Giovanni, 85551 Kirchheim bei München (DE)
(74) Vertreter: Laufhütte, Dieter

(57) **Zusammenfassung**

Übergabevorrichtung zur Übergabe von Gegenständen (10) von einem um eine erste Achse drehbaren Zuführstern (100) mit an seinem Umfang in einem ersten umfangsmäßigen Abstand angeordneten Aufnahmen für die zu übergebenden Gegenstände an einen um eine zweite zur ersten Achse parallele Achse drehbaren Abnahmestern (102) mit an seinem Umfang in einem zweiten umfangsmäßigen Abstand angeordneten Aufnahmen für die abzunehmenden Gegenstände, wobei sich der erste umfangsmäßige Abstand von dem zweiten umfangsmäßigen Abstand unterscheidet, bestehend aus einem Teilungswandler (104) , der zwischen Zuführstern (100) und Abnahmestern (102) angeordnet ist und um eine gemeinsame, zu den Rotationsachsen des Zuführsternes bzw. Abnahmesternes parallele Achse drehbar gelagert ist, wobei der Teilungswandler (104) an seinem Umfang linear verschieblich gelagerte Vakuumsauger (12) als Übergabeaufnahmen (14) für die zu übergebenden Gegenstände (10) aufweist, die bezüglich des Zuführsternes (100) und des Abnahmesternes (102) derart angeordnet und ausgestaltet sind, dass sie zu übergebende Gegenstände von den Aufnahmen des Zuführsternes aufnehmen und durch Zusammenwirken der Linearverschiebung der Vakuumsauger (12) mit der Rotation des Teilungswandlers (104) um die Achse auf einer El-lipsenbahn dem Abnahmestern zuführen und in dessen Aufnahmen übergeben können.

## Beschreibung

Die Erfindung betrifft eine Übergabevorrichtung zur Übergabe von Gegenständen von einer Zuführeinrichtung zu einer Abnahmeeinrichtung, insbesondere von einem Zuführstern an einen Abnahmestern.

Speziell bei der Prüfung und Befüllung von Ampullen oder Fläschchen in automatischen Förderanlagen werden drehbare Kränze bzw. Scheiben eingesetzt, die an ihrem Umfang eine Vielzahl von Aufnahmen für Gegenstände, z. B. für Ampullen oder Fläschchen, aufweisen. Die Aufnahmen sind derart gestaltet, dass sie Gegenstände während der Rotation des Kranzes bzw. der Scheibe halten und mitnehmen. Derartige Kräne bzw. Scheiben werden auch als Sterne bzw. Transportsterne bezeichnet.

In automatisierten Vorgängen werden Gegenstände häufig von einem Stern zu einem anderen Stern übergeben. Beispielsweise werden die Gegenstände von einem Einlaufstern an Inspektionssterne übergeben. Während die Gegenstände von dem Inspektionsstern bewegt werden, werden sie unterschiedlichen Inspektionsvorgängen unterzogen. Z. B. werden Ampullen auf korrekte Befüllung, korrekten Verschluß oder Beschädigungen überprüft. Dazu werden optische oder andere Prüfvorrichtungen eingesetzt.

Andererseits werden die Gegenstände nach der Überprüfung im Inspektionsstern beispielsweise von einem Auslaufstern abgenommen und anderen Verfahrensschritten zugeführt.

Werden die Gegenstände beispielsweise während des Durchlaufs in einem Inspektionsstern beispielsweise einer Inspektion unterzogen, ist es notwendig, dass sie einen ausreichenden Abstand voneinander haben, so dass eine individuelle Inspektion der einzelnen Gegenstände trotz der räumlichen Ausdehnung der Prüfvorrichtung möglich ist. Daher muss bei bekannten Vorrichtungen der Abstand der einzelnen Aufnahmen im Einlauf- bzw. Auslaufstern den Abständen der Aufnahme des Inspektionssterns entsprechen. Dadurch entsteht die Notwendigkeit eines an sich ungünstig großen Abstandes der Aufnahmen des Einlaufsterns bzw. des Auslaufsterns, der dazu führt, dass bei höherer Geschwindigkeit (beispielsweise bei mehr als 300 Übergaben pro Minute) die Maschine unruhig läuft und dadurch laut wird. Der Abstand der einzelnen Gegenstände an einem Stern wird im folgenden auch als Teilung bezeichnet.

Aus der DE 20 2004 006 716 U1 ist bereits eine Übergabevorrichtung bekannt, die es grundsätzlich ermöglicht, Gegenstände von einer Zuführeinrichtung zu einer Abnahmeeinrichtung zu übergeben, auch wenn diese die Gegenstände in unterschiedlichen Abständen transportieren, so dass es möglich ist, immer mit einer optimierten Teilung fahren zu können. Diese vorbekannte Übergabevorrichtung ist aber sehr kompliziert aufgebaut, da sie aus mehreren übereinander angeordneten Sternscheiben besteht, die mittels eines Antriebsystems angetrieben werden müssen, die die einzelnen Übergabesterne derart antreiben, dass sich ein umfangsmäßiger Abstand von Übergabeaufnahmen von zwei um die Übergabesternachse rotierenden Übergabesternen von dem ersten Abstand der Zuführeinrichtung zu dem zweiten Abstand der Abnahmeeinrichtung verändert.

Aufgabe der vorliegenden Erfindung ist es, eine Übergabevorrichtung zu schaffen, die einfacher baut und einen Produkttransport ermöglicht bei dem gleichzeitig noch eine zusätzliche Produktprüfung durchgeführt werden kann.

Erfindungsgemäß wird diese Aufgabe durch eine Übergabevorrichtung mit den Merkmalen des Anspruchs 1 gelöst. Demnach ist eine Übergabevorrichtung geschaffen zur Übergabe von Gegenständen von einem um eine erste Achse drehbaren Zuführstern mit an seinem Umfang in einem ersten umfangsmäßigen Abstand angeordneten Aufnahmen für die zu übergebenden Gegenstände an einen um eine zweite zur ersten Achse parallele Achse drehbaren Abnahmestern mit an seinem Umfang in einem zweiten umfangsmäßigen Abstand angeordneten Aufnahmen für die abzunehmenden Gegenstände, wobei sich der erste umfangsmäßige Abstand von dem zweiten umfangsmäßigen Abstand unterscheidet. Diese Übergabevorrichtung besteht erfindungsgemäß aus einem Teilungswandler, der zwischen dem Zuführstern und Abnahmestern angeordnet ist und um eine gemeinsame, zu den Rotationsachsen des Zuführsternes bzw. Abnahmesternes parallele Achse drehbar gelagert ist, wobei der Teilungswandler an seinem Umfang linear verschieblich gelagerte Vakuumsauger als Übergabeaufnahmen für die zu übergebenden Gegenstände aufweist, die bezüglich des Zuführsternes und des Abnahmesternes derart angeordnet und ausgestaltet sind, dass sie zu übergebende Gegenstände von den Aufnahmen des Zuführsternes aufnehmen und durch Zusammenwirken der Linearverschiebung der Vakuumsauger mit der Rotation des Teilungswandlers um die Achse auf einer Ellipsenbahn dem Abnahmestern zuführen und in dessen Aufnahmen übergeben können.

Der Teilungswandler kann bei der Übergabe der Gegenstände somit unterschiedliche Teilungen zwischen aufeinanderfolgenden Sternen ausgleichen. Erfindungsgemäß wird der Ausgleich der Teilungen durch eine mechanisch gesteuerte Verschiebung der Gegenstände entlang einer ellipsenförmigen Kurve realisiert. Die Ellipsenform wird bei Rotation des Teilungswandlers um seine eigene Rotationsachse unter gleichzeitiger Linearverschiebung der linearverschieblich gelagerten Vakuumsauger erzeugt. Die Kinematik des Produkttransports kann mit Hilfe des Strahlensatzes beschrieben werden.

Bevorzugte Ausgestaltungen der Erfindung ergeben sich aus den sich an den Hauptanspruch anschließenden Unteransprüchen.

Besonders vorteilhaft werden die Gegenstände seitlich vom Vakuumsauger erfaßt und während des Transports festgehalten, so dass sie frei hängend transportierbar sind. Hierdurch sind sie im wesentlichen frei zugänglich und können auch während des Transports mittels des Teilungswandlers inspiziert werden.

Die Linearverschiebung der einzelnen Vakuumsauger wird über ein mit diesen verbundenes Rillenkugellager erzeugt, welches in einer Laufkulisse geführt ist. Die Laufkulisse führt während der Rotation des Teilungswandlers zu der überlagerten Längsverschiebung der Vakuumsauger, so dass sich die gewünschte elliptische Laufbahn der Vakuumsauger ergibt.

Besonders vorteilhaft weisen die linear verschieblichen Vakuumsauger ein zum Längenausgleich bei der Linearverschiebung dienendes teleskopierbares Vakuumleitungssystem auf. Dieses stellt sicher, dass der zu transportierende Gegenstand während des Transportes durch den Vakuumsauger in der Aufnahmetasche gehalten wird.

Die gegenseitig verschiebbaren Leitungen des teleskopierbaren Vakuumleitungssystems können vorteilhaft über einen Radialwellendichtring abgedichtet sein.

Wie zuvor ausgeführt, kann der transportierte Gegenstand während des Transports mittels des Teilungswandlers einer Inspektion zugeführt werden. Als Inspektion bietet sich hier vorteilhaft eine Hochspannungsprüfungseinrichtung zur Hochspannungsprüfung der Gegenstände an. Über eine derartige Hochspannungsprüfeinrichtung werden bestehende Risse in den transportierten Gegenständen detektiert. Eine Hochspannungsprüfeinrichtung wird vorteilhaft dadurch geschaffen, dass die Masseelektrode der Hochspannungsprüfeinrichtung in der Nähe der Seitenwand des Gegenstandes und die Nadelelektroden unter dem Boden des Gegenstandes angeordnet werden.

Mit der erfindungsgemäßen Übergabevorrichtung können beliebige Gegenstände transportiert werden, die von einer Zuführeinrichtung zu einer Abnahmeeinrichtung, insbesondere von einem Zuführstern an einen Abnahmestern, übergeben werden sollen. Besonders vorteilhaft lässt sich die Übergabevorrichtung einsetzen, um Behälter, insbesondere Ampullen oder Flaschen, zu übergeben.

Weitere Merkmale, Einzelheiten und Vorteile der Erfindung werden anhand eines in den beiliegenden Figuren gezeigten Ausführungsbeispiels näher erläutert. Dabei zeigen:
- Figur 1:: eine schematische Darstellung zur Verdeutlichung des Funktionsprinzips,
- Figur 2:: eine Schnittdarstellung eines Details der Übergabevorrichtung der vorliegenden Erfindung,
- Figur 3:: eine perspektivische Darstellung eines vereinzelten Details des Ausführungsbeispiels für die Übergabevorrichtung und die
- Figuren 4, 5:: jeweils eine Schnittdarstellung durch ein Detail der Übergabevorrichtung in unterschiedlichen Betriebszuständen.

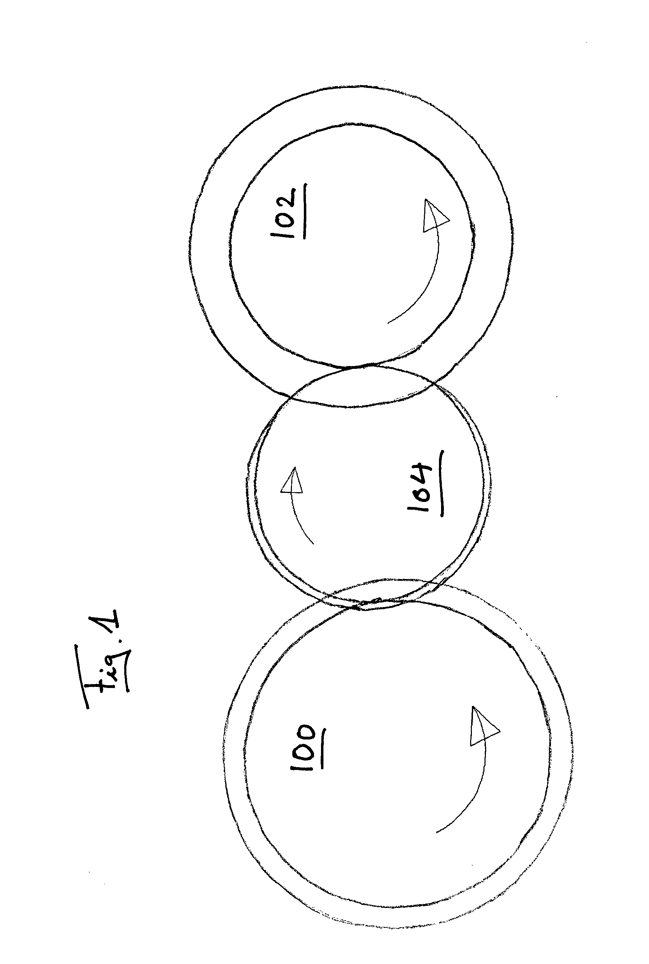

Die Erfindung wird anhand eines Beispiels näher erläutert, bei dem Ampullen 10 von einem Einlaufstern 100 an einen Inspektionsstern 102 übergeben werden sollen. Eine Schemadarstellung für den Übergabeablauf wird anhand der Figur 1 erläutert. In der Figur 1 ist die Vorrichtung ohne transportierte Ampullen 10 gezeigt.

In der schematischen Darstellung nach Figur 1 ist der Einlaufstern 100 ohne die einzelnen Aufnahmen auf seinem Umfang gezeigt. Die einzelnen Aufnahmen haben zueinander einen Abstand und Umfang, der im hier dargestellten Beispiel einer 37er-Teilung entspricht.

Die hier nicht dargestellten Ampullen 10 sollen aus den Aufnahmen des Einlaufsterns 100 mit der 37er-Teilung an einen Inspektionsstern 102 in dessen ebenfalls nicht dargestellten Aufnahmen übergeben werden. Die einzelnen Aufnahmen des Inspektionssterns 102 haben im hier dargestellten Ausführungsbeispiel eine 30er-Teilung, das heißt, dass die Abstände zwischen den einzelnen Aufnahmen größer sind als bei dem Einlaufstern 100. Diese größere Teilung ermöglicht eine individuelle Inspektion der in den Aufnahmen gehaltenen Ampullen auf den Inspektionsstern 102 trotz der seitlichen Ausdehnung etwaiger Inspektionsinstrumente.

Der Einlaufstern 100 und der Inspektionsstern 102 bewegen sich in der durch die Pfeile angedeuteten Drehrichtung. Die Übergabe wird mit einer Übergabevorrichtung 102 bewerkstelligt, deren Funktionsweise im Folgenden erläutert wird. Die Übergabevorrichtung 104, die im Folgenden auch als Teilungswandler bezeichnet wird, dreht sich in der angegebenen Pfeilrichtung. Der Teilungswandler 102 hat die Aufgabe, die unterschiedlichen Teilungen (37er-Teilung des Einlaufsterns 100 und 30er-Teilung des Inspektionssterns 102) auszugleichen. Mit Teilung sind hier, wie zuvor bereits dargelegt, die Anzahl der Aufnahmen im jeweiligen Stern und die somit entstehenden Produktabstände zwischen den jeweiligen Aufnahmetaschen und den darin aufgenommenen Ampullen 10 gemeint.

Durch den Teilungswandler 104 wird der Ausgleich zwischen den Teilungen durch eine Verschiebung der Ampullen 10 entlang einer ellipsenförmigen Kurve realisiert. Die Ellipse wird durch die tangentiale Anordnung an die beiden unterschiedlichen Teilkreise des Einlaufsterns 100 und des Inspektionssterns 102 definiert. Der Teilungswandler 104 selbst rotiert und verschiebt über linear geführte Achsen die Ampullen 10 entlang einer Ellipse. Die dabei beschriebene Bewegung der Ampullen 10 kann mittels des Strahlensatzes erläutert werden.

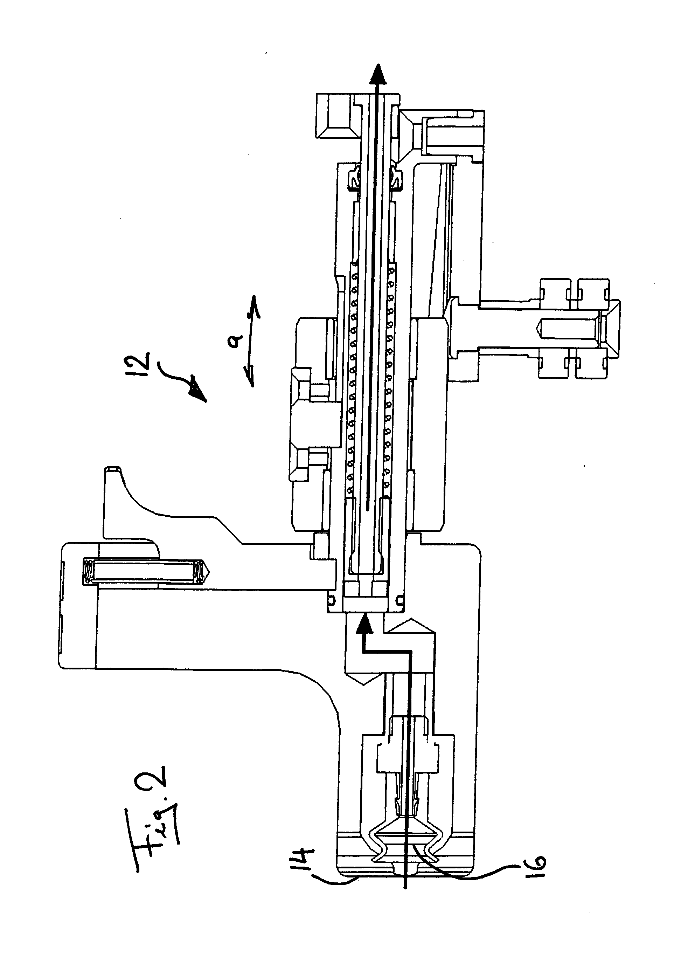

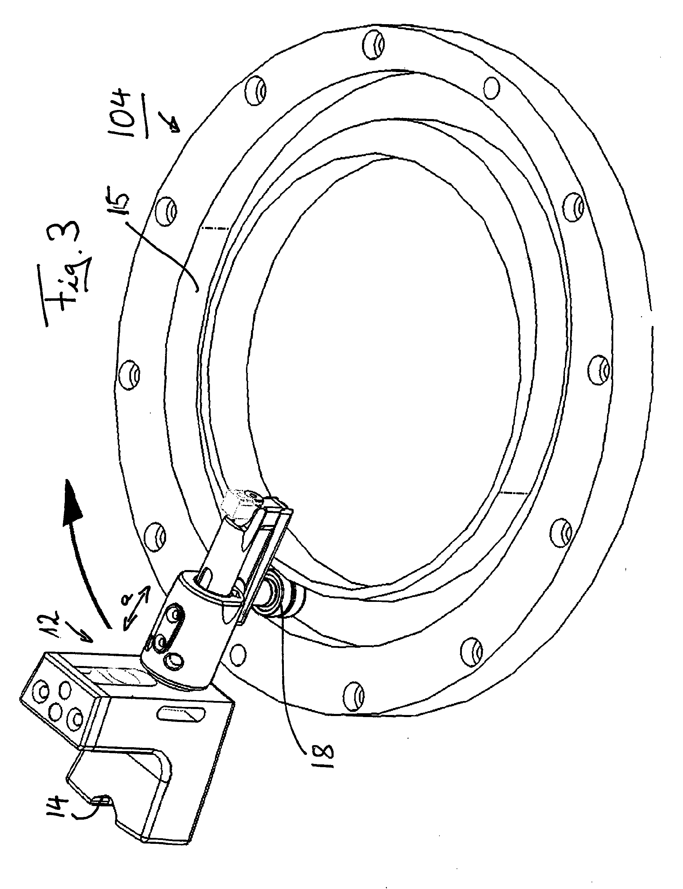

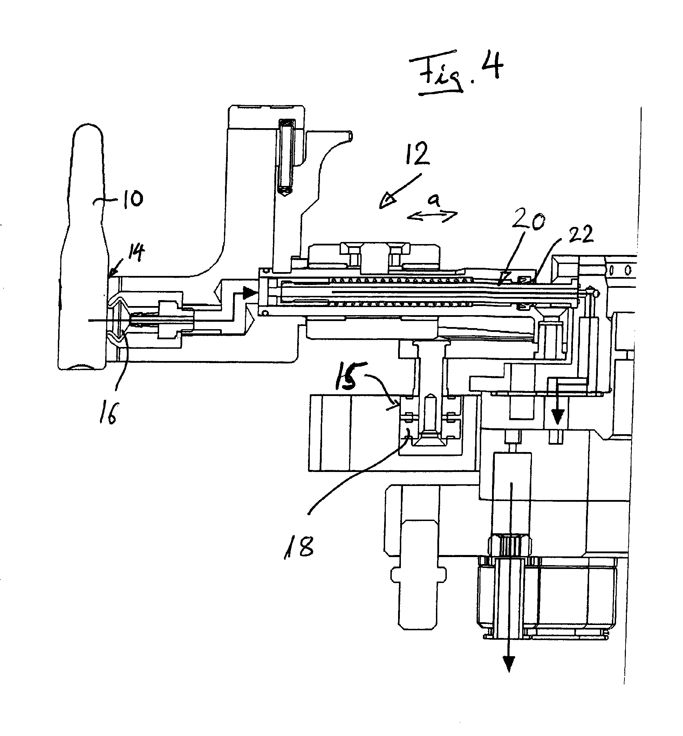

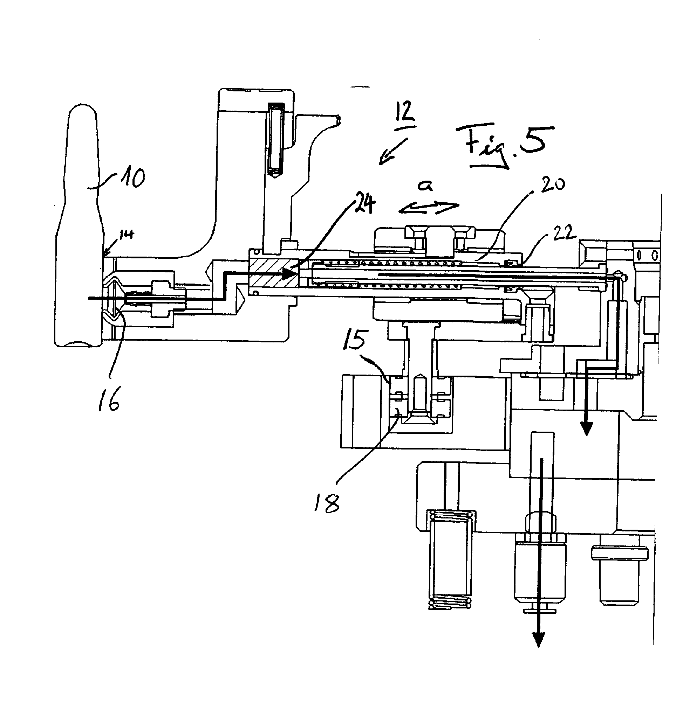

In der Figur 2 ist ein Vakuumsauger 12 im Schnitt dargestellt, der ein wesentliches Teil eines Teilungswandlers 104 gemäß der vorliegenden Erfindung ist. Ein Teilungswandler 104 weist auf Umfang eine große Anzahl dieser Vakuumsauger 12 auf. In Figur 3 ist eine perspektivische Darstellung eines ebenfalls vereinzelt dargestellten Vakuumsaugers 12 gezeigt. In einem Teilungswandler 104 sind beispielsweise 20 bis 30 derartiger Vakuumsauger strahlenförmig nebeneinander angeordnet. Die Vakuumsauger 12 weisen jeweils eine Aufnahme 14 für die aufzunehmenden Ampullen auf. In die Aufnahme 14 mündet eine Vakuumleitung 16, die eine Ampulle 10, wie beispielsweise in den Figuren 4 und 5 gezeigt, an deren Seitenwand in der Aufnahme 14 festlegen kann.

Die Vakuumsauger 12 sind gegenüber dem rotierenden Teilungswandler 104 in Doppelpfeilrichtung a gemäß Figur 2 längsverschieblich ausgeführt.

Diese Längsverschieblichkeit dient dazu, dass die transportierten Ampullen 10 während der Drehung des Teilungswandlers 104 in Pfeilrichtung gemäß Figur 3 eine elliptische Bahn beschreiben. Die zu dem jeweiligen Drehwinkel während der Rotation zu überlagernde Längsverschiebung in Doppelpfeilrichtung a wird durch eine Kulissenführung aufgeprägt. Hierzu weist der Teilungswandler 104 eine entsprechend geformte Laufkurve 16 auf, in welcher der Vakuumsauger 12 mittels eines Rillenkugellagers 18 in der Laufkurve 16 geführt ist. Die Laufkurve bestimmt den Weg und damit den Hub in Doppelpfeilrichtung a und somit die Kurvenbahn der transportierten Ampullen 10.

Anhand der Schnittzeichnungen gemäß der Figuren 4 und 5 ist gezeigt, dass die vom Vakuumsauger 12 jeweils transportierte Ampulle 10 während des Transports durch das aufgebrachte Vakuum in der Aufnahme 14 gehalten wird. In den Figuren 4 und 5 ist mit den Pfeilen der Verlauf der Vakuumleitung 16 dargestellt, über welche die Luft abgesaugt und somit das Vakuum erzeugt wird. Die Leitung 16 weist einen gegenseitig verschiebbaren Leitungsbereich 20 auf, bei dem eine Radialwellendichtung 22 für eine Dichtigkeit des Vakuumleitungssystems dient.

Ein Vergleich der Figuren 4 und 5 zeigt, dass der Vakuumsauger 12 durch die Zwangsführung des Rillenkugellagers 18 in der Laufkurve 15 in Doppelpfeilrichtung längsverschoben ist. Während in der Figur 4 der Vakuumsauger 12 eingezogen ist, ist er in der Darstellung gemäß Figur 5 ausgefahren. Hier ist im Leitungssystem 16 ein in der Figur 5 schraffiert gekennzeichneter Bereich 24 gezeigt, der ebenfalls evakuiert ist. Das teleskopierbare Leitungssystem 20 gleicht die Längenverschiebung des Vakuumsaugers in Doppelpfeilrichtung a aus.

In hier nicht näher dargestellter Art und Weise können die frei hängenden Ampullen 10 einer Hochspannungsrissprüfung unterzogen werden. Hier bietet sich die Hochspannungsrissprüfung des Produktbodens an. Hierzu kann man die Masseelektrode beispielsweise in der Nähe der Seitenwand anbringen, während die Nadelelektroden unterhalb der Ampulle 10 angeordnet werden kann (hier nicht näher dargestellt).

Die Erfindung ist nicht auf den Einsatz zur Übergabe von einem Zuführstern zu einem Inspektionsstern beschränkt. Eine erfindungsgemäße Übergabevorrichtung kann ebenso vorteilhaft zur Übergabe von anders gestalteten Zuführeinrichtungen zu anders gestalteten Abnahmeeinrichtungen dienen, bei denen sich der Abstand der transportierten Gegenstände unterscheiden. Beispielsweise könnten auch Gegenstände von Zellenbändern zugeführt und/oder abgeführt werden.

## Patentansprüche

1. Übergabevorrichtung zur Übergabe von Gegenständen von einem um eine erste Achse drehbaren Zuführstern mit an seinem Umfang in einem ersten umfangsmäßigen Abstand angeordneten Aufnahmen für die zu übergebenden Gegenstände an einen um eine zweite zur ersten Achse parallele Achse drehbaren Abnahmestern mit an seinem Umfang in einem zweiten umfangsmäßigen Abstand angeordneten Aufnahmen für die abzunehmenden Gegenstände, wobei sich der erste umfangsmäßige Abstand von dem zweiten umfangsmäßigen Abstand unterscheidet,
bestehend aus einem Teilungswandler, der zwischen Zuführstern und Abnahmestern angeordnet ist und um eine gemeinsame, zu den Rotationsachsen des Zuführsternes bzw. Abnahmesternes parallele Achse drehbar gelagert ist,
**dadurch gekennzeichnet,**
**dass** der Teilungswandler an seinem Umfang linear verschieblich gelagerte Vakuumsauger als Übergabeaufnahmen für die zu übergebenden Gegenstände aufweist, die bezüglich des Zuführsternes und des Abnahmesternes derart angeordnet und ausgestaltet sind, dass sie zu übergebende Gegenstände von den Aufnahmen des Zuführsternes aufnehmen und durch Zusammenwirken der Linearverschiebung der Vakuumsauger mit der Rotation des Teilungswandlers um die Achse auf einer Ellipsenbahn dem Abnahmestern zuführen und in dessen Aufnahmen übergeben können.

2. Übergabevorrichtung nach Anspruch 1, **dadurch gekennzeichnet, dass** die Gegenstände seitlich vom Vakuumsauger erfaßt und während des Transports festgehalten werden, so dass sie frei hängend transportierbar sind.

3. Übergabevorrichtung nach einem der Ansprüche 1 oder 2, **dadurch gekennzeichnet, dass** die linear verschieblichen Vakuumsauger jeweils über ein Rillenkugellager in einer Laufkulisse geführt sind.

4. Übergabevorrichtung nach einem der Ansprüche 1 bis 3, **dadurch gekennzeichnet, dass** die linear verschieblichen Vakuumsauger ein zum Längenausgleich bei der Linearverschiebung dienendes teleskopierbares Vakuumleitungssystem aufweisen

5. Übergabevorrichtung nach Anspruch 4, **dadurch gekennzeichnet, dass** die gegenseitig verschiebbaren Leitungen des teleskopierbaren Vakuumleitungssystems über einen Radialwellendichtring gegeneinander abgedichtet sind.

6. Übergabevorrichtung nach einem der Ansprüche 1 bis 4, **dadurch gekennzeichnet, dass** sie zusätzlich eine Hochspannungsprüfungseinrichtung zur Hochspannungsprüfung der Gegenstände aufweist.

7. Übergabevorrichtung nach Anspruch 6, **dadurch gekennzeichnet, dass** die Masseelektrode der Hochspannungsprüfeinrichtung in der Nähe der Seitenwand des Gegenstandes und die Nadelelektroden unter dem Boden des Gegenstandes angeordnet sind.

8. Übergabevorrichtung nach einem der Ansprüche 1 bis 7, **dadurch gekennzeichnet, daß** die Vakuumaufnahmen zur Aufnahme von Behältern, insbesondere Ampullen oder Flaschen, ausgestaltet sind.

9. Übergabevorrichtung nach einem der Ansprüche 1 bis 8, **dadurch gekennzeichnet, daß** der Zuführstern und/oder der Abnahmestern ein Inspektionsstern ist.
